# FASCICULE DE BREVET EUROPEEN

(11) **EP 3 650 269 B1**
(45) Date de publication et mention de la délivrance du brevet: **02.06.2021**
(21) Numéro de dépôt: 19205817.0
(22) Date de dépôt: 29.10.2019
(51) Int. Cl.: B60P 1/00

(54) **SYSTÈME DE GUIDAGE POUR PLATEFORME COULISSANTE**
FÜHRUNGSSYSTEM FÜR SCHIEBEPLATTFORM
GUIDING SYSTEM FOR SLIDING PLATFORM

(30) Priorité: 09.11.2018 FR 1860387
(43) Date de publication de la demande: 13.05.2020
(73) Titulaire: Rolide, 59223 Roncq (FR)
(72) Inventeur: MONTAGNE, Quentin, 59910 BONDUES (FR); SERRURIER, Julien, 59200 TOURCOING (FR)
(74) Mandataire: Plasseraud IP

(56) Documents cités:
- EP-A1- 3 296 154
- US-A- 5 052 878

## Description

L'invention est relative à un système de guidage en coulissement, ainsi qu'un dispositif de chargement à plateforme coulissante comprenant un tel système de guidage.

### Domaine technique

L'invention relève du domaine des plateformes de chargement, coulissantes, utilisées pour faciliter le chargement et le déchargement de la surface arrière de véhicule. La plateforme est déployable dans une position où elle est en porte à faux du châssis du véhicule, ce qui permet de faciliter le chargement de la plateforme, et sans avoir à se pencher ou rentrer dans le véhicule, puis est coulissée sur le châssis dans une position rétractée dans laquelle la passerelle est dans les limites dimensionnelles de la zone de chargement du châssis, autorisant notamment la fermeture du hayon de la benne par exemple ; dans un pick up ou la fermeture du coffre dans un véhicule utilitaire.

Il est connu des dispositifs de chargement tels que divulgués par le document US 5.052.878. Un tel dispositif de chargement/déchargement comprend une plateforme, ainsi qu'un système de guidage en coulissement entre la plateforme et la surface arrière d'un véhicule, ledit système de guidage présentant trois sections télescopiques coulissantes l'une par rapport à l'autre, y compris :
- deux premiers rails de base de section en C, formant chacun dans leur cavité un chemin de roulement pour des premiers galets, destinés à être fixés sur le châssis du véhicule,
- deux seconds rails de la section en C, fixés sous la sous-face de la plateforme, formant chacun dans leur cavité un chemin de roulement pour des seconds galets,
- deux poutres intermédiaires, chacune sous forme d'un tube de section rectangulaire portant, d'une part, lesdits premiers galets, saillant latéralement vers l'extérieur, destinés à coopérer au roulement avec les premiers rails fixés au châssis du véhicule, et d'autre part, lesdits second galets, saillant latéralement vers l'intérieur, destinés à coopérer au roulement avec les seconds rails fixés à la plateforme.

De manière notable, dans ce document US 5.052.878 les poutres intermédiaires sont des tubes de section rectangulaire, rigides qui présentent des entretoises internes en X, en insert des tubes, et afin d'augmenter leur rigidité. Selon les constatations des inventeurs, un tel système de guidage télescopique à trois sections est satisfaisant en termes de rigidité, convenant pour des charges importantes, mais permet seulement d'obtenir un déploiement de la plateforme suivant une course limitée.

On connait encore de l'état de la technique, en particulier du document EP 3.296.154 A1 des présents inventeurs, un dispositif de chargement dont le système de guidage, télescopique à trois sections, convient pour des déploiements plus importants, par exemple compris entre 85% et 90% de la longueur de la plateforme selon cette antériorité.

Le système de guidage comprend un premier châssis mobile, coulissant par rapport à un châssis fixe, solidaire de la surface arrière du véhicule, par l'intermédiaire d'un premier système de glissière entre le châssis fixe et le premier châssis mobile, ainsi qu'un second châssis mobile coulissant par rapport au premier châssis mobile par l'intermédiaire d'un deuxième système de glissière entre le premier châssis mobile et le deuxième châssis mobile : ladite plateforme coulissante est alors rigidement solidaire du second châssis mobile.

Le premier système de glissière entre le châssis fixe et le premier châssis mobile, comprend :
- des premiers rails dudit châssis fixe, sous forme d'un profilé en C et des premiers galets dudit premier châssis mobile destinés à coopérer au roulement avec lesdits premiers rails,
- des deuxièmes rails du premier châssis mobile, sous forme de profilés en C, et des seconds galets dudit châssis fixe destinés à coopérer au roulement avec lesdits deuxièmes rails.

Le deuxième système de glissière entre le premier châssis mobile et le deuxième châssis mobile comprend :
- des premiers rails dudit premier châssis mobile, sous forme de profilés en C, et des premiers galets dudit deuxième châssis mobile destinés à coopérer au roulement avec lesdits premiers rails,
- des deuxièmes rails du deuxième châssis mobile, sous forme de profilé en C, et des deuxièmes galets dudit premier châssis mobile destinés à coopérer au roulement avec lesdits deuxièmes rails.

Comme visible à la figure 9 de cette antériorité EP3.296.154 A1, le premier châssis mobile comprend un cadre formé de deux longerons, sous forme de tube de section rectangulaire, et de deux traverses, chacune solidarisant les deux tubes.

Sur le premier châssis mobile, et pour chaque tube de section rectangulaire, le second rail, de profilé en C, destiné à recevoir un galet du châssis fixe, est solidaire par sa partie dorsale à la face latérale du tube orientée vers l'extérieur, le premier rail également de profilé en C, destiné à recevoir un galet du deuxième châssis mobile, est solidaire par sa face dorsale de l'autre face latérale du tube, opposée, orientée vers l'intérieur.

### Problème technique

Selon les constatations des inventeurs, et si un tel dispositif de chargement/déchargement selon EP 3.296.154 A1 donne pleinement satisfaction en terme de rigidité, et de performance au déploiement, en autorisant des courses au déploiement importantes, il présente un poids conséquent qui freine son intégration dans les véhicules légers. En particulier et selon les observations des inventeurs, le poids du premier châssis mobile, intermédiaire, qui comprend deux traverses, deux longerons sous forme de tubes rectangulaires, mais encore quatre rails en C, fixés deux à deux à chaque longeron peut être optimisé.

L'invention vient améliorer la situation existante connue des antériorités US5.052.878 et EP3.296.154 A1 en proposant un système de guidage au coulissement pour dispositif de chargement/déchargement à plateforme coulissante qui autorise des déploiements de la plateforme importants, typiquement supérieurs ou égaux à 80% de la longueur de la plateforme, qui procure une rigidité suffisante pour le guidage en charge de la plateforme depuis sa position rétractée vers sa position déployée (ou inversement) de l'ordre de 100 kg, voire même plusieurs centaines de kilogrammes, et dont le poids est maîtrisé de sorte à ne pas grever le poids total du véhicule lorsque ledit dispositif est intégré au véhicule.

Un autre but de la présente invention est de proposer un tel système de guidage, de coût de revient, optimisé, limitant le nombre de références pour sa fabrication.

### Exposé de l'invention

Il est proposé un système de guidage télescopique convenant pour assurer le guidage d'une plateforme de chargement par rapport au châssis d'un véhicule comprenant au moins un couple formé par un premier rail et un second rail sensiblement d'axes parallèles, sous forme de profilé en C, le profilé du premier rail présentant un chemin de roulement pour un premier galet solidaire du châssis du véhicule, le profilé du second rail présentant un chemin de roulement pour un second galet solidaire de la plateforme mobile.

Selon l'invention :
- les profilés en C du premier rail et du second rail comprennent chacun une section, y compris deux ailes sensiblement parallèles, reliées entre elles par une aile de liaison, lesdites ailes parallèles et ladite aile de liaison définissant entre elles ladite cavité formant le chemin de roulement pour le galet, premier galet ou second galet, et en ce que ladite aile de liaison présente sur sa partie dorsale une excroissance orientée opposée à la cavité, comprenant une rainure d'accrochage
- les deux profilés dudit couple de premier rail et du second rail sont assemblés l'un à l'autre en appui par leur zone dorsale respective, et dans une position où les deux rainures d'accrochage sont en regard, une clé de verrouillage étant reçue simultanément dans les deux rainures d'accrochage, ladite clé de verrouillage présentant une première portion d'accrochage reçue dans la rainure d'accrochage du premier rail et une deuxième portion d'accrochage reçue dans la rainure d'accroche de la rainure d'accrochage du second rail de manière à assurer la fixation des deux profilés du couple premier rail et second rail entre eux.

Selon des caractéristiques optionnelles de l'invention, prises seules ou en combinaison :
- les ailes parallèles du profilé du premier rail sont situées respectivement dans le prolongement des ailes parallèles du profilé du second rail lorsque le premier rail et le second rail sont fixés l'un à l'autre par la clé de verrouillage ;
- ladite excroissance s'étend sur la hauteur du profilé le long de ladite aile intermédiaire à partir l'une des deux ailes parallèles et sur la moitié de la hauteur de ladite aile de liaison ladite excroissance formant avec l'autre moitié de l'aile de liaison un épaulement, ladite rainure d'accrochage recevant la clé de verrouillage étant débouchante avec une entrée de rainure orientée suivant une direction parallèle au plan de la dite aile de liaison, ladite entrée de la rainure étant orientée vers l'intérieur ;
- ladite rainure d'accrochage présente une section en T, la clé de verrouillage présentant une section complémentaire à la réunion des deux sections en T par la base du T.

Selon un mode de réalisation, le système de guidage présente un premier couple de premier rail et de second rail et un second couple de premier rail et de second rail, le premier couple et le deuxième couple formant un même ensemble cinématique du système de guidage, le premier rail et le second rail de chaque couple étant assemblés l'un à l'autre en appui par leur zone dorsale respective, et dans une position où les deux rainures d'accrochage sont en regard, ladite clé de verrouillage étant reçue simultanément dans les deux rainures d'accrochage.

Un châssis intermédiaire, mobile, peut ainsi comprendre un cadre, le premier couple de premier rail et de second rail, d'une part, et le second couple de premier rail et de second rail d'autre part, formant respectivement deux longerons du cadre, deux traverses joignant chacune entre eux les deux longerons.

Selon un mode de réalisation, ledit système de guidage comprend au moins un troisième rail, solidaire du châssis du véhicule portant ledit premier galet, ledit troisième rail de profilé en C formant un chemin de roulement recevant un troisième galet saillant du premier rail.

Par exemple, deux troisièmes rails sont solidaires du châssis du véhicule l'un recevant un troisième galet du premier rail du premier couple de premier rail et de second rail, l'autre recevant un troisième galet du premier rail du deuxième couple de premier rail et de second rail.

Selon un mode de réalisation un châssis fixe, solidaire du châssis du véhicule comprend un cadre, lesdits deux troisièmes rails formant les longerons du cadre, deux traverses joignant chacune entre eux les deux longerons.

Selon un mode de réalisation, au moins un quatrième rail, solidaire de la plateforme porte ledit deuxième galet, ledit au moins quatrième rail de profilé en C formant un chemin de roulement recevant un quatrième galet saillant du deuxième rail.

Selon un mode de réalisation, le système de guidage comprend deux quatrièmes rails, l'un recevant un quatrième galet du deuxième rail du premier couple de premier rail et de second rail, l'autre recevant un quatrième galet du deuxième rail du deuxième couple de premier rail et de second rail.

Selon un mode de réalisation, un châssis mobile solidaire de la plateforme comprend un cadre, lesdits deux quatrièmes rails formant les longerons du cadre, deux traverses joignant chacune entre eux les deux longerons.

Selon un mode de réalisation avantageux, le au moins un premier rail, ledit au moins second rail, d'une part, et le au moins troisième rail et/ ledit au mois quatrième rail sont constitués par des profilés en C, identiques, présentant ladite excroissance sur la partie dorsale, ainsi que ladite rainure d'accrochage.

Selon un mode de réalisation, les profilés comprennent outre ladite rainure d'accrochage, dite première rainure, une seconde rainure d'accrochage débouchant vers l'extérieur sur une portion de l'excroissance prolongeant l'une des deux ailes parallèles du profilé. Par exemple ladite seconde rainure reçoit un organe de fixation assurant la fixation dudit au moins quatrième rail à la sous face de la plateforme.

Les caractéristiques exposées dans les paragraphes suivants peuvent, optionnellement, être mises en œuvre. Elles peuvent être mises en œuvre indépendamment les unes des autres ou en combinaison les unes avec les autres.

L'invention et les variantes de celle-ci peuvent permettre, de manière générale, de proposer un dispositif de chargement à plateforme coulissante, de poids maîtrisé, facilitant son intégration dans un véhicule léger. De manière générale, les profilés en C utilisés pour le premier rail, le deuxième rail, et/ou le troisième rail et/ou le quatrième rail peuvent être en aluminium, afin de réduire plus encore le poids.

L'invention concerne encore un dispositif de chargement comprenant une plateforme, ainsi qu'un système de guidage selon l'invention assurant le guidage en translation de la plateforme par rapport au châssis d'un véhicule.

Une telle solution permet de résoudre les problèmes posés par les solutions connues de EP 3.296.154 A1

### Brève description des dessins

D'autres caractéristiques, détails et avantages de l'invention apparaîtront à la lecture de la description détaillée ci-après, et à l'analyse des dessins annexés, sur lesquels :

### Fig. 1

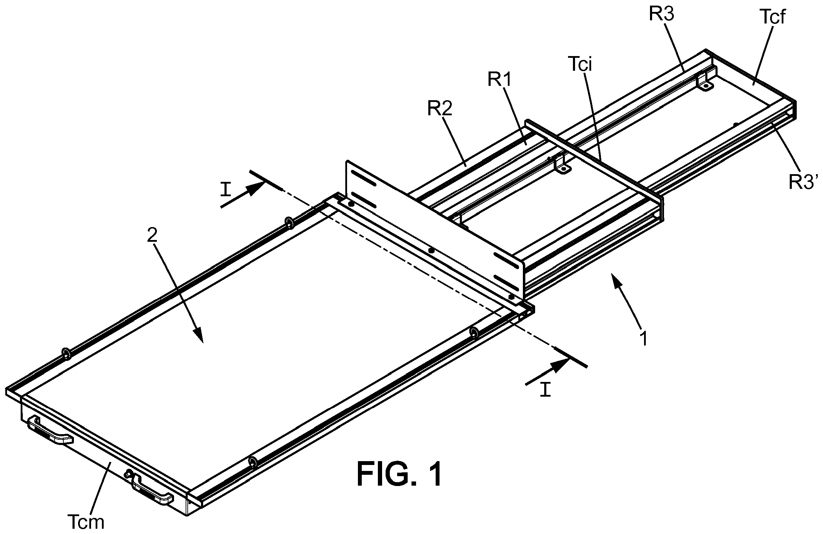

[Fig. 1] est une vue en perspective d'un dispositif de chargement selon un mode de réalisation, dans la position déployée du système de guidage télescopique ;

### Fig. 2

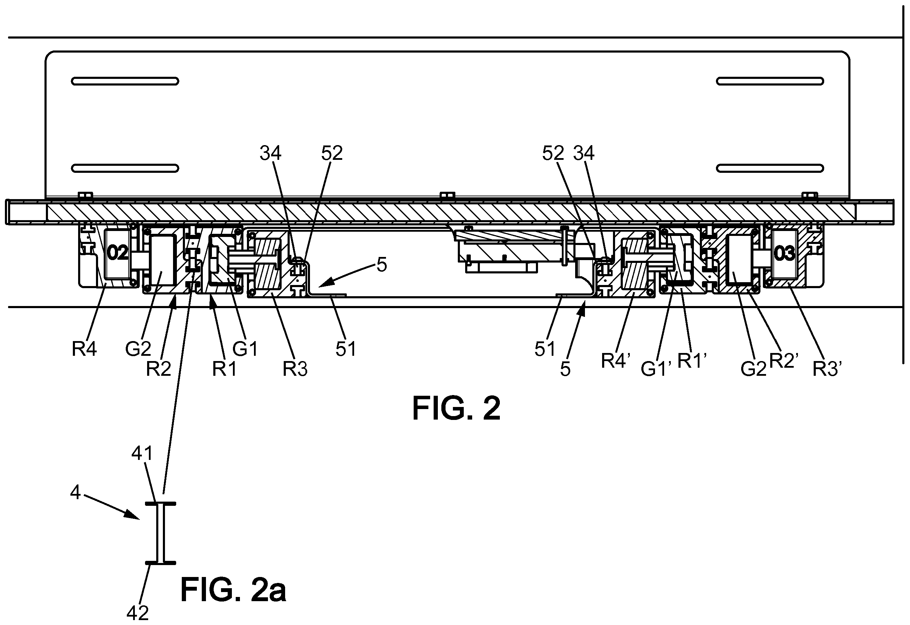

[Fig. 2] est une vue de coupe du système de guidage du dispositif de la figure 1, selon un plan perpendiculaire à la direction de déploiement de la plateforme ;

### Fig.2a

[Fig. 2a] est une vue de détail de la figure 2.

### Fig. 3

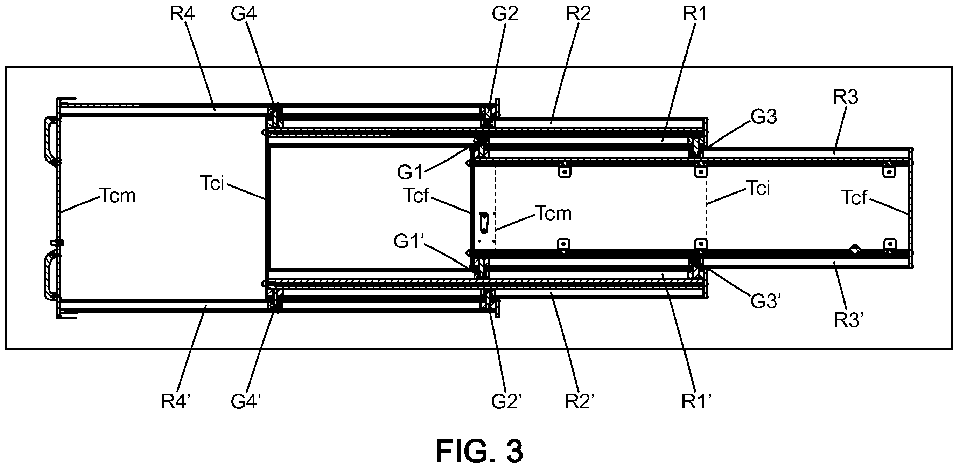

[Fig. 3] est une vue de coupe du système de guidage du dispositif de la figure 1, selon un plan de coupe parallèle à la plateforme passant à mi-hauteur des rails du système de guidage ;

### Fig. 4

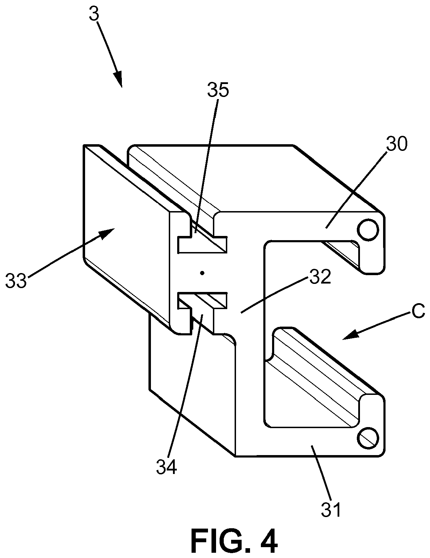

[Fig. 4] est une vue en perspective de détail, illustrant un profilé, universel pouvant être utilisé pour constituer indifféremment le premier, second, troisième ou quatrième rail du système de guidage du dispositif de chargement.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

L'invention concerne tout d'abord un système de guidage 1 télescopique convenant pour assurer le guidage d'une plateforme 2 de chargement par rapport au châssis d'un véhicule comprenant au moins un couple formé par un premier rail R1 ;R1' et un second rail R2 ; R2', sensiblement d'axes parallèles, sous forme de profilé en C, le profilé du premier rail R1 ; R1' présentant un chemin de roulement pour un premier galet G1 ; G1' solidaire du châssis du véhicule, le profilé du second rail présentant un chemin de roulement pour un second galet G2,G2' solidaire de la plateforme mobile.

Selon un mode de réalisation illustré aux figures, le système de guidage comprend un premier couple formé par un premier rail R1 et un second rail R2, solidaires entre eux et un second couple formé par un premier rail R1' et un second rail R2', solidaires entre eux. Les deux couples forment un même ensemble cinématique du système de guidage.

Selon un mode de réalisation illustré, un châssis intermédiaire, mobile, comprend un cadre, le premier couple de premier rail R1 et de second rail R2, d'une part, et le second couple de premier rail R1' et de second rail R2' d'autre part, formant respectivement deux longerons du cadre, deux traverses Tci joignant chacune entre eux les deux longerons respectivement formés par le premier couple et ledit second couple.

Ledit au moins un couple formé par un premier rail R1 ; R1' et un second rail R2 ; R2', en particulier le premier couple formé par un premier rail et un second rail et ledit second couple formé par un premier rail et un second rail, et plus particulièrement le châssis intermédiaire forme la deuxième section du système de guidage télescopique, configurée pour coulisser, d'une part, par rapport à une première section du système de guidage télescopique, solidaire du châssis du véhicule et comportant ledit au moins premier galet G1, G1', et d'autre part, par rapport à une troisième section du système de guidage télescopique comportant lesdits seconds galets G2, G2' ;

Les deux profilés 3 en C du premier rail R1 ;R1' et les deux profilés 3 en C du second rail R2 ;R2' comprennent chacun une section, y compris deux ailes 30,31, sensiblement parallèles, reliées entre elles par une aile de liaison 32, lesdites ailes parallèles 30,31 et ladite liaison 32 définissant entre elles ladite cavité C formant le chemin de roulement pour le galet, à savoir le premier galet G1 ; G1' ou ledit second galet G2, G2'. Les deux profilés formant un premier rail R1, R1' et un second rail R2, R2' sont de préférence de sections identiques. Avantageusement une même filière d'extrusion peut être utilisée pour la fabrication des premiers et seconds rails R1, R', R2, R2'.

Selon l'invention, ladite aile intermédiaire 32 présente sur sa partie dorsale une excroissance 33 orientée opposée à la cavité, comprenant une rainure d'accrochage 34, orientée longitudinalement suivant la direction du profilé. Avantageusement les deux profilés 3 dudit couple de premier rail R1; R1' et du second rail R2 ; R2' sont assemblés l'un à l'autre en appui par leur zone dorsale respective, et dans une position où les deux rainures d'accrochage 34 sont en regard. Une clé de verrouillage 4 est avantageusement reçue simultanément dans les deux rainures d'accrochage pour assurer la fixation du premier rail R1, R1' au second rail R2, R2'. A cet effet, ladite clé de verrouillage présentant une première portion d'accrochage 41 reçue dans la rainure d'accrochage du premier rail et une deuxième portion d'accrochage 42 reçue dans la rainure d'accrochage du second rail. Cette clé peut être constituée elle-même par un profilé.

La première portion d'accrochage 41 de la clé de verrouillage peut être enfilée dans la rainure d'accrochage 34 du premier rail R1 ;R1', à partir de l'extrémité de la rainure : cette partie d'accrochage est toutefois dimensionnée selon une dimension supérieure à l'entrée de rainure de sorte à interdire son retrait par l'entrée de rainure. La deuxième portion d'accrochage 42 de la clé de verrouillage peut être enfilée dans la rainure d'accrochage du deuxième rail R2, R2', à partir de l'extrémité de la rainure : cette partie d'accrochage est toutefois dimensionnée supérieure à l'entrée de rainure de sorte à interdire son retrait par l'entrée de rainure. Par exemple, ladite rainure d'accrochage présente une section en T, la clé de verrouillage présentant une section complémentaire à la réunion des deux sections en T par la base du T, autrement une section en I.

On entend par excroissance le fait que l'épaisseur de l'aile intermédiaire 32 du profilé 3 est supérieure à l'épaisseur des ailes parallèles 30 et 31, et de sorte à ménager suffisamment de matière pour la formation d'une rainure d'accrochage recevant en partie la clé de verrouillage. Lorsqu'assemblées entre elles par la clé de verrouillage, les deux excroissances assurent la rigidité du longeron formé par le couple de rail, et avantageusement, sans nécessiter de tube de section rectangulaire, intermédiaire, comme l'état de la technique constitué par EP3.296.154 A1.

Selon un mode de réalisation non illustré, ladite excroissance peut s'étendre sur toute la hauteur de ladite aile intermédiaire, en particulier d'épaisseur constante. Dans un tel cas, la rainure peut déboucher selon une direction sensiblement perpendiculaire à la surface interne de l'aile de liaison 3, et être centrée par rapport à l'aile de liaison 32.

Selon un autre mode de réalisation illustré, ladite excroissance s'étend seulement sur une partie de la hauteur de l'aile de liaison 32, tel que par exemple sur la demi-hauteur de ladite aile de liaison. Les partie dorsales mutuellement en appui sont de préférence de formes complémentaires, et afin d'améliorer l'assemblage.

Selon ce mode de réalisation avantageux, ladite excroissance 33 peut s'étendre sur la hauteur du profilé le long de ladite aile intermédiaire 32, à partir de l'une des deux ailes parallèles 30, et sur la moitié de la hauteur de ladite aile de liaison 32, ladite excroissance 33 formant avec l'autre moitié (sans excroissance) de l'aile de liaison un épaulement, ladite rainure d'accrochage recevant la clé de verrouillage étant débouchante avec une entrée de rainure orientée suivant une direction parallèle au plan de la surface interne de ladite aile de liaison 32, l'entrée de la rainure orientée vers l'intérieur. Une telle section permet d'utiliser deux profilés identiques pour le premier rail et le second rail. Lorsqu'en appui par leur partie dorsale, les deux épaulements de deux profilés sont imbriqués, et de préférence sans jeu, l'excroissance 33 de chaque profilé venant en butée sur la section de l'aile de liaison 32 dépourvue d'excroissance de l'autre profilé.

D'une manière générale, la section de la clé de verrouillage est dimensionnée pour que la première portion 41 de la clé soit dimensionnée au jeu de fonctionnement dans la rainure du premier rail R1, R1' et pour que la deuxième portion 42 soit dimensionnée au jeu de fonctionnement dans la rainure du second rail R2, R2'. L'assemblage peut être réalisé à force, en enfilant la clé suivant son axe le long des rainures, voire même en chauffant les profilés avant insertion de la clé de verrouillage afin de faciliter cette étape.

De préférence, les ailes parallèles 30,31 du profilé du premier rail R1 ;R1' sont situées respectivement dans le prolongement des ailes parallèles 30,31 du profilé du second rail R2 ;R2', lorsque les deux profilés sont en appui par leur partie dorsale, fixés l'un à l'autre par la clé de verrouillage. L'assemblage des deux profilés, présente une hauteur sensiblement égale à la dimension séparant les deux ailes parallèles 30 et 31.

Selon un mode de réalisation, le système de guidage comprend au moins un troisième rail R3 ; R3', solidaire du châssis du véhicule portant ledit premier galet G1, G1', ledit troisième rail de profilé en C formant un chemin de roulement recevant un troisième galet G3 ;G3' saillant et solidaire du premier rail R1; R1'. De préférence, le système de guidage comprend deux troisièmes rails R3 ;R3', l'un repéré R3 recevant un troisième galet G3 solidaire du premier rail R1 du premier couple de premier rail R1 et de second rail R2, d'une part, l'autre repéré R3' recevant un troisième galet G3' du premier rail du deuxième couple de premier rail R1' et de second rail R2'.

Un châssis fixe, solidaire du châssis du véhicule peut ainsi comprendre un cadre, lesdits deux troisièmes rails R3,R3' formant les longerons du cadre, deux traverses Tcf joignant chacune entre eux les deux longerons. On remarque que le profilé formant le ou les troisièmes rails peut encore être de section identique à celui utilisé pour les profilés des premier et second rail. On peut avantageusement utiliser la même filière d'extrusion pour les premiers et seconds rails R1, R1', R2, R2', mais encore pour les troisièmes rails R3, R3'.

On remarque que la fixation des troisièmes rails R3, R3' au châssis du véhicule peut utiliser la rainure d'accrochage du rail. A cet effet une première équerre 5, comprend ainsi une première aile 51 inférieure fixée au châssis du véhicule, et une seconde aile 52, supérieure, notamment parallèle à la première aile, venant en appui sur une face de l'épaulement formé sur l'excroissance, la seconde aile 52 recevant un organe de fixation tel qu'une vis venant coopérer avec un élément tel qu'un écrou, maintenu prisonnier dans la rainure d'accrochage, de dimension supérieure à l'entrée de rainure. Le châssis fixe forme la première section télescopique du système de guidage coopérant au coulissement avec le châssis intermédiaire, formant la deuxième section télescopique du système de guidage.

Selon un mode de réalisation, le système de guidage comprend au moins un quatrième rail R4; R4', solidaire de la plateforme portant ledit deuxième galet G2, G2', ledit au moins quatrième rail R4 ; R4 de profilé en C formant un chemin de roulement recevant un quatrième galet G4; G4' saillant du deuxième rail R2; R2'.

Selon un mode de réalisation, le système de guidage comprend deux quatrièmes rails R4 ;R4', l'un R4 recevant un quatrième galet G4 du deuxième rail R2 du premier couple de premier rail R1 et de second rail R2, l'autre recevant un quatrième galet G4' du deuxième rail R2' du deuxième couple de premier rail R1' et de second rail R2'.

Un châssis mobile solidaire de la plateforme comprend un cadre, lesdits deux quatrièmes rails R4,R4' formant les longerons du cadre, deux traverses Tcm joignant chacune entre elles les deux longerons. On remarque que le profilé formant le ou les quatrièmes rails peuvent encore être de section identique à celui utilisé pour les profilés des premier et second rails. On peut avantageusement utiliser la même filière d'extrusion pour les premiers et seconds rails R1, R1', R2, R2', mais encore pour les troisièmes rails R4, R4'.

Les profilés comprennent outre ladite rainure d'accrochage 34, dite première rainure, une seconde rainure d'accrochage 35 débouchant vers l'extérieur sur une portion de l'excroissance prolongeant l'une repérée 30 des deux ailes parallèles. Comme illustré, la seconde rainure d'accrochage 35 peut être sensiblement être opposée à la position de la première rainure d'accroche 34.

Par exemple ladite second rainure 35 recevant un organe de fixation assurant la fixation dudit au moins quatrième rail R4,R4' à la sous face de la plateforme 2. Eventuellement, la seconde rainure 35 peut être utilisée pour fixer le troisième rail R3, R3' au châssis du véhicule.

D'une manière générale, les extrémités distales des ailes parallèles du profilé du premier rail R1 ;R1' et/ou du second rail R2 ;R2' et/ou du troisième rail R3,R3' et/ou du quatrième rail R4 ;R4' présentent des rebords incurvés 36 l'un vers l'autre, distants l'un de l'autre d'une dimension inférieure au diamètre du galet tels que premier galet G1 ; G1', deuxième galet G2, G2', troisième galet G3, G3' ou quatrième galet G4, G4' reçu dans le chemin de roulement, et afin d'assurer l'arrêt de galet dans le chemin de roulement suivant la direction de l'axe du galet, suivant deux sens, sensiblement perpendiculaires à l'axe de liaison 32 du profilé en C.

### Application industrielle

L'invention peut trouver à s'appliquer notamment au domaine de véhicule légers.

### Liste des signes de référence

- 1 : Système de guidage
- 2. Plateforme
- 3. Profilés
- 30, 31. Ailes parallèles
- 32. Aile de liaison
- 33. Excroissance
- 34. Rainure d'accrochage (première)
- 35. Rainure d'accrochage (seconde)
- 36. Rebords incurvées
- 4. Clé de verrouillage
- 41. Première portion d'accrochage
- 42. Deuxième portion d'accrochage
- 5. Equerre de fixation
- 51. Première aile (équerre)
- 52. Deuxième aile (équerre)
- R1, R1'.Premier rails
- R2, R2'. Deuxième rails
- R3, R3'. Troisième rails
- R4, R4'. Quatrième rails
- G1, G1'. Premiers galets
- G2, G2'. Deuxièmes galets
- G3, G3'. Troisième galets
- G4, G4'. Quatrième galets
- Tci. Traverses châssis intermédiaire,
- Tcf. Traverses châssis fixe,
- Tcm. Traverses châssis mobile.

## Revendications

1. Système de guidage (1) télescopique convenant pour assurer le guidage d'une plateforme (2) de chargement par rapport au châssis d'un véhicule comprenant au moins un couple formé par un premier rail (R1 ;R1') et un second rail (R2 ; R2'), sensiblement d'axes parallèles, sous forme de profilé en C, le profilé du premier rail (R1 ; R1') présentant un chemin de roulement pour un premier galet (G1 ; G1') solidaire du châssis du véhicule, le profilé du second rail présentant un chemin de roulement pour un second galet (G2,G2') solidaire de la plateforme mobile,
les profilés (3) en C du premier rail (R1 ; R1') et du second rail (R2 ; R2') comprenant chacun une section, y compris deux ailes (30,31), sensiblement parallèles, reliées entre elles par une aile de liaison (32), lesdites ailes parallèles (30,31) et ladite aile de liaison (32) définissant entre elles ladite cavité (C) formant le chemin de roulement pour le galet, premier galet (G1,G1') ou second galet (G2,G2'), **caractérisé en ce que** ladite aile de liaison (32) présente sur sa partie dorsale une excroissance (33) orientée opposée à la cavité, comprenant une rainure d'accrochage (34) **et en ce que** les deux profilés (3) dudit couple de premier rail (R1 ; R1') et du second rail (R2 ; R2') sont assemblés l'un à l'autre en appui par leur zone dorsale respective, et dans une position où les deux rainures d'accrochage (34) sont en regard, une clé de verrouillage (4) étant reçue simultanément dans les deux rainures d'accrochage, ladite clé de verrouillage présentant une première portion d'accrochage (41) reçue dans la rainure d'accrochage du premier rail et une deuxième portion d'accrochage (42) reçue dans la rainure d'accroche de la rainure d'accrochage du second rail de manière à assurer la fixation des deux profilés du couple premier rail et second rail entre eux.

2. Système selon la revendication 1, dans lequel les ailes parallèles (30,31) du profilé du premier rail (R1 ;R1') sont situées respectivement dans le prolongement des ailes parallèles (30,31) du profilé du second rail (R2 ;R2'), lorsque le premier rail et le second rail sont fixés l'un à l'autre par la clé de verrouillage.

3. Système de guidage selon la revendication 1 ou 2 dans lequel ladite excroissance (33) s'étend sur la hauteur du profilé le long de ladite aile intermédiaire (32), à partir d'une des deux ailes parallèles (30), et sur la moitié de la hauteur de ladite aile de liaison (32), ladite excroissance (33) formant avec l'autre moitié de l'aile de liaison un épaulement, ladite rainure d'accrochage recevant la clé de verrouillage étant débouchante avec une entrée de rainure orientée suivant une direction parallèle au plan de ladite aile de liaison (32), l'entrée de la rainure orientée vers l'intérieur.

4. Système selon l'une des revendications 1 à 3, dans lequel ladite rainure d'accrochage présente une section en T, la clé de verrouillage présentant une section complémentaire à la réunion des deux sections en T par la base du T.

5. Système selon l'une des revendications 1 à 4, présentant un premier couple de premier rail (R1) et de second rail (R2) et un second couple de premier rail (R1') et de second rail (R2'), le premier couple et le deuxième couple formant un même ensemble cinématique du système de guidage, le premier rail et le second rail de chaque couple étant assemblés l'un à l'autre en appui par leur zone dorsale respective, et dans une position où les deux rainures d'accrochage (34) sont en regard, ladite clé de verrouillage étant reçue simultanément dans les deux rainures d'accrochage.

6. Système selon la revendication 5, dans lequel un châssis intermédiaire, mobile, comprend un cadre, le premier couple de premier rail (R1) et de second rail (R2), d'une part, et le second couple de premier rail (R1') et de second rail (R2') d'autre part, formant respectivement deux longerons du cadre, deux traverses joignant chacune entre eux les deux longerons.

7. Système selon l'une des revendications 1 à 6, dans lequel au moins un troisième rail (R3 ; R3'), solidaire du châssis du véhicule porte ledit premier galet (G1, G1'), ledit troisième rail de profilé en C formant un chemin de roulement recevant un troisième galet (G3 ;G3') saillant du premier rail (R1; R1').

8. Système selon les revendications 5 et 7 comprenant deux troisièmes rails (R3 ;R3'), solidaires du châssis du véhicule, l'un (R3) recevant un troisième galet (G3) du premier rail (R1) du premier couple de premier rail (R1) et de second rail (R2), l'autre recevant un troisième galet (G3') du premier rail du deuxième couple de premier rail (R1') et de second rail (R2').

9. Système selon la revendication 8, dans lequel un châssis fixe, solidaire du châssis du véhicule comprend un cadre, lesdits deux troisièmes rails (R3,R3') formant les longerons du cadre, deux traverses (Rcf) joignant chacune entre eux les deux longerons.

10. Système selon l'une des revendications 1 à 9, dans lequel au moins un quatrième rail (R4; R4'), solidaire de la plateforme porte ledit deuxième galet (G2, G2'), ledit au moins quatrième rail (R4 ; R4) de profilé en C formant un chemin de roulement recevant un quatrième galet (G4; G4') saillant du deuxième rail (R2; R2').

11. Système selon les revendications 5 et 10 comprenant deux quatrièmes rails (R4 ;R4'), l'un (R4) recevant un quatrième galet (G4) du deuxième rail (R2) du premier couple de premier rail (R1) et de second rail (R2), l'autre recevant un quatrième galet (G4') du deuxième rail (R2') du deuxième couple de premier rail (R1') et de second rail (R2').

12. Système selon la revendication 11, dans lequel un châssis mobile solidaire de la plateforme comprend un cadre, lesdits deux quatrièmes rails (R4,R4') formant les longerons du cadre, deux traverses joignant chacune entre eux les deux longerons.

13. Système selon l'une des revendications 7 à 9 ou 10 à 12 dans lequel le au moins un premier rail (R1 ;R1'), ledit au moins second rail (R2, R2'), d'une part, et le au moins troisième rail (R3,R3') et/ou ledit au moins quatrième rail (R4 ;R4) sont constitués par des profilés en C, identiques, présentant ladite excroissance (33) sur la partie dorsale, ainsi que ladite rainure d'accrochage (34).

14. Système selon la revendication 13 dans lequel les profilés comprennent outre ladite rainure d'accrochage (34), dite première rainure, une seconde rainure d'accrochage (35) débouchant vers l'extérieur, sur une portion de l'excroissance prolongeant l'une (30) des deux ailes parallèles (30,31) du profilé (3), ladite seconde rainure (35) recevant un organe de fixation assurant la fixation dudit au moins quatrième rail à la sous face de la plateforme.

15. Système selon l'une des revendications 1 à 14, dans lequel les extrémités distales des ailes parallèles du profilé du premier rail (R1 ;R1') et/ou du second rail (R2 ;R2') et/ou du troisième rail (R3,R3') et/ou du quatrième rail (R4 ;R4') présentent des rebords incurvés (36) l'un vers l'autre, distants l'un de l'autre d'une dimension inférieure au diamètre du galet reçu dans le chemin de roulement, et afin d'assurer l'arrêt de galet dans le chemin de roulement suivant la direction de l'axe du galet, suivant deux sens.

16. Dispositif de chargement comprenant une plateforme, ainsi qu'un système de guidage selon l'une des revendications 1 à 15 assurant le guidage en translation de la plateforme par rapport au châssis d'un véhicule.

## Patentansprüche

1. Teleskopisches Führungssystem (1), das dazu geeignet ist, die Führung einer Ladeplattform (2) in Bezug auf das Chassis eines Fahrzeugs sicherzustellen, das mindestens ein Paar umfasst, das aus einer ersten Schiene (R1; R1') und einer zweiten Schiene (R2; R2') mit im Wesentlichen parallelen Achsen in C-Profil-Formen gebildet ist, wobei das Profil der ersten Schiene (R1; R1') eine Lauffläche für eine erste Walze (G1, G1'), die fest mit dem Chassis des Fahrzeugs verbunden ist, aufweist, wobei das Profil der zweiten Schiene eine Lauffläche für eine zweite Walze (G2, G2'), die fest mit der beweglichen Plattform verbunden ist, aufweist,
wobei die C-Profile (3) der ersten Schiene (R1; R1') und der zweiten Schiene (R2; R2') jeweils einen Schnitt einschließlich zweier Flügel (30, 31), die im Wesentlichen parallel sind, die miteinander durch einen Verbindungsflügel (32) verbunden sind, umfassen, wobei die parallelen Flügel (30, 31) und der Verbindungsflügel (32) miteinander den Hohlraum (C) definieren, der die Lauffläche für die Walze, erste Walze (G1, G1') oder zweite Walze (G2,G2'), bildet, **dadurch gekennzeichnet, dass** der Verbindungsflügel (32) auf seinem Rückenteil eine Ausstülpung (33) aufweist, die zu dem Hohlraum entgegengesetzt ausgerichtet ist, die eine Einhängnut (34) umfasst, und dass die zwei Profile (3) des Paares aus erster Schiene (R1; R1') und zweiter Schiene (R2; R2') in Auflage durch ihre jeweilige Rückenzone und in einer Position zusammengefügt sind, in der die zwei Einhängnuten (34) einander gegenüber liegen, wobei ein Verriegelungsschlüssel (4) gleichzeitig in den zwei Einhängnuten aufgenommen ist, wobei der Verriegelungsschlüssel einen ersten Einhängabschnitt (41), der in der Einhängnut der ersten Schiene aufgenommen ist, und einen zweiten Einhängabschnitt (42) aufweist, der in der Einhängnut der Einhängnut der zweiten Schiene derart aufgenommen ist, dass die Befestigung der zwei Profile des Paares aus erster Schiene und zweiter Schiene miteinander sichergestellt ist.

2. System nach Anspruch 1, wobei die parallelen Flügel (30, 31) des Profils der ersten Schiene (R1; R1') jeweils in der Verlängerung der parallelen Flügel (30, 31) des Profils der zweiten Schiene (R2; R2') liegen, wenn die erste Schiene und die zweite Schiene aneinander durch den Verriegelungsschlüssel befestigt sind.

3. Führungssystem nach Anspruch 1 oder 2, wobei sich die Ausstülpung (33) auf der Höhe des Profils entlang des Zwischenflügels (32) ausgehend von einem der zwei parallelen Flügel (30) und auf der Hälfte der Höhe des Verbindungsflügels (32) erstreckt, wobei die Ausstülpung (33) mit der anderen Hälfte des Verbindungsflügels eine Schulter bildet, wobei die Einhängnut, die den Verriegelungsschlüssel aufnimmt, durchgehend ist, mit einem Nuteingang, der entlang einer Richtung parallel zu der Ebene des Verbindungsflügels (32) ausgerichtet ist, wobei der Eingang der Nut zum Inneren ausgerichtet ist.

4. System nach einem der Ansprüche 1 bis 3, wobei die Einhängnut einen T-Schnitt aufweist, wobei der Verriegelungsschlüssel einen komplementären Schnitt zu der Verbindung der zwei T-Schnitte durch die Basis des T aufweist.

5. System nach einem der Ansprüche 1 bis 4, das ein erstes Paar aus erster Schiene (R1) und zweiter Schiene (R2), und ein zweites Paar aus erster Schiene (R1') und zweiter Schiene (R2') aufweist, wobei das erste Paar und das zweite Paar dieselbe Kinematikeinheit des Führungssystems bilden, wobei die erste Schiene und die zweite Schiene jedes Paares in Auflage auf ihrer jeweiligen Rückenzone und in einer Position zusammengefügt sind, in der die zwei Einhängnuten (34) einander gegenüber liegen, wobei der Verriegelungsschlüssel gleichzeitig in den zwei Einhängnuten aufgenommen ist.

6. System nach Anspruch 5, wobei ein bewegliches Zwischenchassis einen Rahmen, das erste Paar aus erster Schiene (R1) und zweiter Schiene (R2) einerseits und das zweite Paar aus erster Schiene (R1') und zweiter Schiene (R2') andererseits umfasst, die jeweils zwei Längsträger des Rahmens bilden, wobei zwei Querträger jeden der zwei Längsträger miteinander zusammenfügen.

7. System nach einem der Ansprüche 1 bis 6, wobei mindestens eine dritte Schiene (R3; R3'), die fest mit dem Chassis des Fahrzeugs verbunden ist, die erste Walze (G1, G1') trägt, wobei die dritte C-Profil-Schiene eine Lauffläche bildet, die eine dritte Walze (G3; G3'), die aus der ersten Schiene (R1; R1') vorragt, aufnimmt.

8. System nach den Ansprüchen 5 und 7, das zwei dritte Schienen (R3; R3') umfasst, die fest mit dem Chassis des Fahrzeugs verbunden sind, wobei eine (R3) eine dritte Walze (G3) der ersten Schiene (R1) des ersten Paares aus erster Schiene (R1) und zweiter Schiene (R2) aufnimmt, wobei die andere eine dritte Walze (G3') der ersten Schiene des zweiten Paares aus erster Schiene (R1') und zweiter Schiene (R2') aufnimmt.

9. System nach Anspruch 8, wobei ein stationäres Chassis, das fest mit dem Chassis des Fahrzeugs verbunden ist, einen Rahmen umfasst, wobei die zwei dritten Schienen (R3, R3') die Längsträger des Rahmens bilden, wobei die zwei Querträger (Rcf) jeweils die zwei Längsträger miteinander zusammenfügen.

10. System nach einem der Ansprüche 1 bis 9, wobei mindestens eine vierte Schiene (R4; R4'), die fest mit der Plattform verbunden ist, die zweite Walze (G2, G2') trägt, wobei die mindestens vierte C-Profil-Schiene (R4; R4) eine Lauffläche bildet, die eine vierte Walze (G4; G4'), die aus der zweiten Schiene (R2; R2') vorragt, aufnimmt.

11. System nach den Ansprüchen 5 und 10, das zwei vierte Schienen (R4; R4') umfasst, wobei eine (R4) eine vierte Walze (G4) der zweiten Schiene (R2) des ersten Paares aus erster Schiene (R1) und zweiter Schiene (R2) aufnimmt, wobei die andere eine vierte Walze (G4') der zweiten Schiene (R2') des zweiten Paares aus erster Schiene (R1') und zweiter Schiene (R2') aufnimmt.

12. System nach Anspruch 11, wobei ein bewegliches Chassis, das fest mit der Plattform verbunden ist, einen Rahmen umfasst, wobei die zwei vierten Schienen (R4, R4') die Längsträger des Rahmens bilden, wobei zwei Querträger jeweils die zwei Längsträger miteinander zusammenfügen.

13. System nach einem der Ansprüche 7 bis 9 oder 10 bis 12, wobei die mindestens eine erste Schiene (R1; R1'), die mindestens zweite Schiene (R2, R2') einerseits und die mindestens dritte Schiene (R3, R3') und/oder die mindestens vierte Schiene (R4; R4') aus identischen C-Profilen bestehen, die die Ausstülpung (33) auf dem Rückenteil sowie die Einhängnut (34) aufweisen.

14. System nach Anspruch 13, wobei die Profile außerdem die Einhängnut (34), die erste Nut, eine zweite Einhängnut (35), die nach außen auf einem Abschnitt der Ausstülpung, der einen (30) der zwei parallelen Flügel (30, 31) des Profils (3) verlängert, durchgeht, umfassen, wobei die zweite Nut (35) ein Befestigungsorgan aufnimmt, das die Befestigung der mindestens vierten Schiene an der unteren Fläche der Plattform sicherstellt.

15. System nach einem der Ansprüche 1 bis 14, wobei die distalen Enden der parallelen Flügel des Profils der ersten Schiene (R1; R1') und/oder der zweiten Schiene (R2; R2') und/oder der dritten Schiene (R3; R3') und/oder der vierten Schiene (R4; R4') einwärts zueinander gebogene Ränder (36) aufweisen, die voneinander um ein Maß kleiner als der Durchmesser der Walze, die in der Lauffläche aufgenommen ist, beabstandet sind, und um das Stoppen der Walze in der Lauffläche entlang der Richtung der Achse der Walze entlang von zwei Richtungen sicherzustellen.

16. Ladevorrichtung, die eine Plattform sowie ein Führungssystem nach einem der Ansprüche 1 bis 15, das die Führung in Verschiebung der Plattform in Bezug auf das Chassis eines Fahrzeugs sicherstellt, umfasst.

## Claims

1. A telescopic guide system (1) suitable for ensuring the guiding of a loading platform (2) relative to the chassis of a vehicle comprising at least one pair formed by a first rail (R1; R1') and a second rail (R2; R2'), substantially of parallel axes, in the form of a C-shaped profile, the profile of the first rail (R1; R1') having a raceway for a first roller (G1; G1') which is secured to the chassis of the vehicle, the profile of the second rail having a raceway for a second roller (G2, G2') which is secured to the movable platform,
the C-shaped profiles (3) of the first rail (R1; Rl') and the second rail (R2; R2') each comprising a section, including two wings (30, 31), substantially parallel, which are connected to each other by a connecting wing (32), said parallel wings (30, 31) and said connecting wing (32) defining therebetween said cavity (C) forming the raceway for the roller, first roller (G1, G1') or second roller (G2, G2'), **characterised in that** said connecting wing (32) has on the dorsal portion thereof a protuberance (33) which is oriented opposite to the cavity, comprising a hooking groove (34) **and in that** the two profiles (3) of said pair of the first rail (R1; R1') and second rail (R2; R2') are assembled to each other bearing by the respective dorsal area thereof, and in a position where the two hooking grooves (34) are opposite to each other, a locking key (4) being received simultaneously in the two hooking grooves, said locking key having a first hooking portion (41) which is received in the hooking groove of the first rail and a second hooking portion (42) which is received in the groove for hooking the hooking groove of the second rail so as to ensure the fastening of the two profiles of the first rail and second rail pair to each other.

2. The system according to claim 1, wherein the parallel wings (30, 31) of the profile of the first rail (R1; R1') are located respectively in the extension of the parallel wings (30, 31) of the profile of the second rail (R2; R2'), when the first rail and the second rail are fastened to each other by the locking key.

3. The guide system according to claim 1 or 2, wherein said protuberance (33) extends over the height of the profile along said intermediate wing (32), from one of the two parallel wings (30), and over half the height of said connecting wing (32), said protuberance (33) forming with the other half of the connecting wing a shoulder, said hooking groove receiving the locking key being opening with a groove entry which is oriented in a direction parallel to the plane of said connecting wing (32), the entry of the groove oriented inwardly.

4. The system according to one of claims 1 to 3, wherein said hooking groove has a T-shaped section, the locking key having a section which is complementary to the union of the two T-shaped sections by the base of the T.

5. The system according to one of claims 1 to 4, having a first pair of first rail (R1) and second rail (R2) and a second pair of first rail (R1') and second rail (R2'), the first pair and the second pair forming the same kinematic assembly of the guide system, the first rail and the second rail of each pair being assembled to each other bearing by the respective dorsal area thereof, and in a position where the two hooking grooves (34) are opposite to each other, said locking key being received simultaneously in the two hooking grooves.

6. The system according to claim 5, wherein an intermediate chassis, which is movable, comprises a frame, the first pair of first rail (R1) and second rail (R2), on the one hand, and the second pair of first rail (R1') and second rail (R2'), on the other hand, forming respectively two side rails of the frame, two cross members each joining the two side rails to each other.

7. The system according to one of claims 1 to 6, wherein at least one third rail (R3; R3'), secured to the chassis of the vehicle, carries said first roller (G1, G1'), said third C-shaped profile rail forming a raceway receiving a third roller (G3; G3') protruding from the first rail (R1; R1').

8. The system according to claims 5 and 7, comprising two third rails (R3; R3'), secured to the chassis of the vehicle, one (R3) receiving a third roller (G3) of the first rail (R1) of the first pair of first rail (R1) and second rail (R2), the other receiving a third roller (G3') of the first rail of the second pair of first rail (R1') and second rail (R2').

9. The system according to claim 8, wherein a fixed chassis, secured to the chassis of the vehicle, comprises a frame, said two third rails (R3, R3') forming the side rails of the frame, two cross members (Rcf) each joining the two side rails to each other.

10. The system according to one of claims 1 to 9, wherein at least one fourth rail (R4; R4'), secured to the platform, carries said second roller (G2, G2'), said at least fourth rail (R4; R4) of C-shaped profile forming a raceway receiving a fourth roller (G4; G4') protruding from the second rail (R2; R2').

11. The system according to claims 5 and 10, comprising two fourth rails (R4; R4'), one (R4) receiving a fourth roller (G4) of the second rail (R2) of the first pair of first rail (R1) and second rail (R2), the other receiving a fourth roller (G4') of the second rail (R2') of the second pair of first rail (R1') and second rail (R2').

12. The system according to claim 11, wherein a movable chassis which is secured to the platform comprises a frame, said two fourth rails (R4, R4') forming the side rails of the frame, two cross members each joining the two side rails to each other.

13. The system according to one of claims 7 to 9 or 10 to 12, wherein the at least one first rail (R1; R1'), said at least second rail (R2, R2'), on the one hand, and the at least third rail (R3, R3') and/or said at least fourth rail (R4; R4) consist of identical C-shaped profiles having said protuberance (33) on the dorsal portion, as well as said hooking groove (34).

14. The system according to claim 13, wherein the profiles comprise in addition to said hooking groove (34), called first groove, a second hooking groove (35) opening outwards, on a portion of the protuberance extending one (30) of the two parallel wings (30, 31) of the profile (3), said second groove (35) receiving a fastening member ensuring the fastening of said at least fourth rail to the underside of the platform.

15. The system according to one of claims 1 to 14, wherein the distal ends of the parallel wings of the profile of the first rail (R1; R1') and/or the second rail (R2; R2') and/or the third rail (R3, R3') and/or the fourth rail (R4; R4') have flanges (36) which are curved towards each other, spaced apart from each other by a dimension which is less than the diameter of the roller received in the raceway, and in order to ensure the roller stop in the raceway in the direction of the axis of the roller, in two directions.

16. A loading device comprising a platform, as well as a guide system according to one of claims 1 to 15, ensuring the translational guiding of the platform relative to the chassis of a vehicle.
